(19) Europäisches Patentamt
European Patent Office
Office européen des brevets

(11) Veröffentlichungsnummer: **0 075 173**
**B1**

(12) # EUROPÄISCHE PATENTSCHRIFT

(45) Veröffentlichungstag der Patentschrift: **01.04.87**

(51) Int. Cl.⁴: **C 09 B 1/20**, C 09 B 1/50, C 09 B 1/54, C 09 B 1/56, C 09 K 19/32

(21) Anmeldenummer: **82108190.8**

(22) Anmeldetag: **06.09.82**

(54) **Anthrachinonfarbstoffe.**

(30) Priorität: **18.09.81 DE 3137298**

(43) Veröffentlichungstag der Anmeldung: **30.03.83 Patentblatt 83/13**

(45) Bekanntmachung des Hinweises auf die Patenterteilung: **01.04.87 Patentblatt 87/14**

(84) Benannte Vertragsstaaten: **CH DE FR GB IT LI NL**

(73) Patentinhaber: **BAYER AG, Konzernverwaltung RP Patentabteilung, D-5090 Leverkusen 1 Bayerwerk (DE)**

(72) Erfinder: **Claussen, Uwe, Dr., Carl-Rumpff-Strasse 29, D-5090 Leverkusen (DE)**
Erfinder: **Neeff, Rütger, Dr., Berta-von-Suttner-Strasse 22, D-5090 Leverkusen (DE)**
Erfinder: **Kröck, Friedrich Wilhelm, Dr., Ackerstrasse 45, D-5068 Odenthal (DE)**

(56) Entgegenhaltungen:
**EP - A - 0 026 004**
**EP - A - 0 034 832**
**EP - A - 0 038 460**
**EP - A - 0 054 217**
**CH - A - 3 279**
**CH - A - 3 280**
**CH - A - 15 371**
**CH - A - 556 369**
**DE - A - 1 644 587**
**FR - A - 1 352 732**
**FR - A - 2 077 385**
**FR - A - 2 463 799**
**FR - A - 2 466 494**
**GB - A - 2 071 685**
**GB - A - 2 074 182**
**GB - A - 2 091 283**

(56) Entgegenhaltungen: (Fortsetzung)
**CHEMICAL ABSTRACTS, Band 81, Nr. 4, 29. Juli 1974, Seite 77, Nr. 14713u, Columbus, Ohio, USA**

**EP 0 075 173 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Anthrachinonfarbstoffe, Verfahren zu ihrer Herstellung und ihre Verwendung zum Färben sowie flüssigkristallines Material enthaltend diese Anthrachinonfarbstoffe.

Aus der EP-Al-34 832 sind pleochroitische Anthrachinonfarbstoffe bekannt, die gemäss der allgemeinen Formel in den α-Stellungen des Anthrachinonringes durch Amino- oder Methylaminogruppen substituiert sein können, und die in 2,6-Stellung u.a. Phenoxy-, Phenylamino- oder Phenylthioreste tragen können, die ihrerseits p-ständig durch Alkyl-, (substituierte) Amino-, Alkyloxy- oder Aryloxyreste substituiert sind.

Die erfindungsgemässen Anthrachinonfarbstoffe entsprechen der Formel

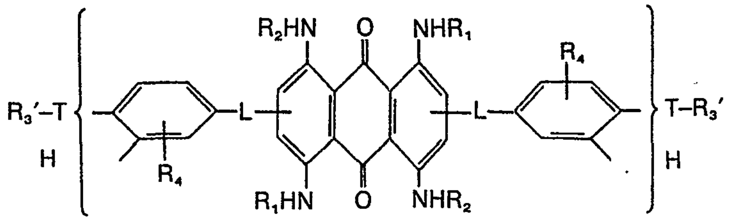

I

In der Formel I bedeuten

$R_3'$ über $-\underset{R_1}{\underset{|}{N}}-$, –O–, –S– oder direkt an T gebundenes $C_1$–$C_{12}$-Alkyl, das beispielsweise durch –OH, $-OCH_3$, Halogen oder $-SCH_3$ substituiert sein kann, $C_5$–$C_6$-Cycloalkyl, Benzyl oder Phenethyl, wobei die Phenylreste im Aralkylrest z.B. durch –OH, $C_1$–$C_4$-Alkoxy, $C_1$–$C_4$-Alkylthio, Phenoxy, Phenylthio, $C_1$–$C_4$-Alkyl und Halogen substituiert sein können,

T eine Gruppe –O–C(L)–, $-NR_1-C(L)-$, –C(L)–, $-O-SO_2-$ oder $-SO_2-$,

L ein O- oder S-Atom oder die Gruppe $-NR_1-$,

$R_1$, $R_2$ H, Alkyl, Cycloalkyl, Aryl oder Aralkyl,

$R_4$ H, Halogen, $CF_3$, Alkyl oder Alkoxy und

$R_1$, $R_2$, $R_3$, $R_4$, $R_7$, $R_8$ in der Bedeutung von Alkyl stehen vorzugsweise für $C_1$–$C_8$-Alkyl, das z.B. durch $C_1$–$C_6$-Alkoxy, $C_1$–$C_6$-Alkylthio, Phenoxy, Phenylthio, Cl, Br, F, $-NH_2$, –SH, –OH oder –CN substituiert sein kann.

$R_1$, $R_2$, $R_5$, $R_6$ in der Bedeutung von Cycloalkyl stehen bevorzugt für $C_3$–$C_7$-Cycloalkyl, besonders bevorzugt für Cyclohexyl oder Cyclopentyl, die z.B. durch $C_1$–$C_6$-Alkyl, $C_1$–$C_6$-Alkoxy, Phenoxy, Cl, Br, F, $-NH_2$, –SH, –OH oder –CN substituiert sein können.

$R_1$, $R_2$, $R_5$, $R_6$ in der Bedeutung von Aryl stehen bevorzugt für Phenyl, Naphthyl und Biphenylyl, die beispielsweise durch $C_1$–$C_6$-Alkoxy, $C_1$–$C_6$-Alkyl, Phenoxy und F, Cl, Br, $C_1$–$C_6$-Alkylthio, Phenylthio und –OH substituiert sein können.

$R_1$, $R_2$, $R_3$, $R_5$, $R_6$, in der Bedeutung von Aralkyl stehen bevorzugt für Phenyl-$C_1$–$C_4$-alkyl, das im Phenylrest z.B. die vorstehend für Aryl genannten Substituenten tragen kann.

$R_4$, $R_7$, $R_8$ in der Bedeutung von Alkoxy bezeichnen vorzugsweise $C_1$–$C_8$-Alkoxy.

$R_4$, $R_8$ stehen in der Bedeutung von Halogen vorzugsweise für Fluor, Chlor und Brom. (Die Reste $R_3$ und $R_5$–$R_8$ treten in Formel IV auf.)

Die neuen Farbstoffe kennzeichnet eine ausgezeichnete Lichtechtheit sowie ein hoher Ordnungsgrad und in überwiegendem Masse eine für die technische Verwendung ausreichende Löslichkeit in flüssigkristallinen Materialien. Die genannten Eigenschaften sind für die Eignung als Farbstoffe in elektrooptischen Anzeigeelementen, die nach dem guest-host-Prinzip arbeiten, von entscheidender Bedeutung (DE-OS 3 028 593).

Opto-elektronische Anzeigeelemente bestehen in der Regel aus 2 parallel (im Abstande von 5–50 μ) angeordneten Glasplatten. An deren Innenseiten werden Elektroden angebracht, zwischen denen das flüssigkristalline Material eingebettet wird. Die Funktionsfähigkeit einer optoelektronischen Anzeige beruht auf der orientierten Struktur der Flüssigkristalle, die sich durch das angelegte elektrische Feld verändern lässt.

Die orientierte Struktur der flüssigkristallinen Materialien kann sich geeigneten Farbstoffen mitteilen, so dass diese als «Gäste» an der Struktur teilnehmen.

Die erfindungsgemässen Farbstoffe liefern blaue, violette und rotstichig blaue Farbtöne. Sie werden in guest-host-Anzeigen, deren Aufbau und Arbeitsweise bekannt ist (Heilmeyer et al., Mol. Crystals and Liquid Cryst. 8, 293–309 (1969), DE-OS 2 639 675, DE-OS 2 658 568), als Lösung in einer nematischen Flüssigkristallmischung verwendet. Das flüssigkristalline Material als Wirtsphase enthält wenigstens einen erfindungsgemässen Farbstoff und kann daneben weitere Farbstoffe enthalten. Diese können dichroitische Eigenschaften besitzen oder nicht. Die Lösung enthält vorzugsweise etwa 0,01 bis etwa 30 Gew.-%, besonders bevorzugt etwa 0,1 bis etwa 10 Gew.-% Farbstoff (als Gast) und die Wirtsphase besteht überwiegend aus nematischem flüssigkristallinem Material und kann weitere Zusätze, beispielsweise zur cholesterinischen Orientierung enthalten.

Die neuen Farbstoffe eignen sich weiterhin zum Färben von textilen Materialien vorzugsweise auf Polyesterbasis oder zum Massefärben von Kunststoffen wie z.B. Polystyrol, Polyvinylchlorid, Polycarbonat u.a. Vorzugsweise finden sie jedoch Verwendung in flüssigkristallinen Materialien. Die Erfindung betrifft demnach weiterhin flüssigkristalline Materialien, welche Anthrachinonfarbstoffe der Formel (I) enthalten. Das flüssigkristalline Material hat vorzugsweise positive dielektrische Anisotropie und kann in opto-elektronischen Anzeigevorrichtungen eingesetzt werden. Von den

verschiedenen Ordnungszuständen flüssigkristalliner Materialien sind die nematischen und cholesterinischen bevorzugt, entsprechend den Definitionen, wie sie beispielsweise bei R. Steinsträsser, L. Pohl, Angew. Chem. 85, 706 (1973) angegeben sind.

In feldlosem Zustand kann man zwei Orientierungen des flüssigkristallinen Materials unterscheiden, die von der Eigenschaft der Phasengrenze und damit von der Vorbehandlung der Glasplatten abhängen. Je nachdem ob die lange Achse der Moleküle, aus denen die flüssigkristalline Phase besteht, senkrecht oder waagerecht zur Plattenoberfläche gerichtet ist, spricht man von homöotroper oder homogener Textur. Die Herstellungstechniken zur Erzeugung geeigneter Oberflächen sind bekannt (Ullmann, 4. Aufl. (1976), Bd. XI, S. 657 ff). Von den Dipoleigenschaften der flüssigkristallinen Verbindungen ist die dielektrische Anisotropie abhängig. Sie ist positiv, wenn das elektrische Feld eine homöotrope Ausrichtung bewirkt, negativ wenn sie homogen wird. Die Verwendung der erfindungsgemässen Farbstoffe in flüssigkristallinen Materialien mit positiver dielektrischer Anisotropie und einem Mesophasenbereich von $-20$ – $+$ 80 °C ist bevorzugt. Als flüssigkristalline Materialien geeignet sind z.B. Gemische aus
Alkyl-cyano-biphenylen, Alkoxy-cyano-biphenylen,
Alkyl-cyano-terphenylen, Phenylcyclo-hexanen,
Bicyclohexylen, Azoxyverbindungen,
Schiffsche Basen, Benzoesäurephenylestern,
Thiobenzoesäurephenylestern und Terpyrimidinen.

Besonders hervorzuheben ist eine Mischung aus
51% 4′-n-Pentyl-4-cyano-biphenyl,
25% 4′-n-Heptyl-4-cyano-biphenyl,
16% 4′-n-Octyl-4-cyano-biphenyl und
8% 4″-n-Pentyl-4-cyano-terphenyl
und eine Mischung aus ca.
24% trans-4-Heptyl-(4-cyano-phenyl)-cyclohexan,
37% trans-4-Pentyl-(4-cyanophenyl)-cyclohexan,
26% trans-4-Propyl-(4-cyanophenyl)-cyclohexan und
12% trans-4-Pentyl-(4′-cyano-biphenylyl)-cyclohexan.

Neben den flüssigkristallinen Verbindungen und dem Farbstoff kann das flüssigkristalline Material weitere übliche Zusätze enthalten, z.B. optisch aktive Verbindungen, die eine nematische Phase in eine cholesterinische umwandeln können oder Substanzen zur Verminderung der Schwellenspannung usw.

Als Beispiel für käufliche und geeignete Flüssigkristallmassen wären für eine positive DK-Anisotropie die Produkte «Ro-TN-403», «Ro-TN-103», «Merck ZLI 1221», «Merck TLC 1132», und «Merck ZLI 1291» zu nennen. Beispiele für nematische FK-Massen mit negativer DK-Anisotropie sind «Merck-Licristal 914» und «Chisso Lixon En-18».

Die Güte der guest-host-Wechselwirkung ist durch die mittlere Abweichung der geometrischen Achse der Farbstoffmoleküle von der durch die Moleküle des flüssigkristallinen Materials vorgegebenen Vorzugsrichtung angebbar. Man kann einen Ordnungsgrad S definieren, der die mittlere Abweichung berücksichtigt und bei vollkommener Ordnung den Wert 1,0 annimmt. Praktisch wird dieser Wert nicht erreicht, vielmehr sind die S-Werte $<1{,}0$. Die Definition des Ordnungsgrades und seine Bedeutung ist bei D.L. White und G.N. Taylor, J. Appl. Phys. (5), 4718–23 (1974) oder beispielsweise in der EP-OS 2 104 beschrieben.

Für die technische Verwendung sind Farbstoffe mit hohem Ordnungsgrad besonders wertvoll. Jedoch müssen eine Reihe weiterer Eigenschaften vorhanden sein. Die photochemische Stabilität muss sehr gut sein, der Farbton darf im Licht weder verschiessen noch ausbleichen. Darüber hinaus wird eine gute chemische Beständigkeit in dem komplex zusammengesetzten flüssigkristallinen Medium verlangt. Schliesslich muss sich der Farbstoff gut lösen und darf auch bei anhaltend tiefen Temperaturen nicht kristallisieren.

Es ist offensichtlich, dass es nicht viele Stoffe gibt, die die Gesamtheit aller Eigenschaften in zufriedenstellender Weise erfüllen. Eine notwendige Voraussetzung für die Brauchbarkeit der Farbstoffe ist der Dichroismus der Lichtabsorption in Abhängigkeit von der Orientierung der Wirt-Flüssigkristalle.

Es bedeutet eine besondere Schwierigkeit, die Farbstoffe unter Erhalt der dichroitischen Echtheits- und Farb-Eigenschaften ausreichend löslich zu machen. Gerade zur Optimierung der Löslichkeit sind zahlreiche Versuche notwendig und es lässt sich diese Eigenschaft nur sehr schwer und unvollkommen voraussagen. Generell macht man die Erfahrung, dass die Löslichkeit mit zunehmender Substitution abnimmt, während der Ordnungsgrad beispielsweise durch aufwendige Substitution verbessert wird.

Es war daher sehr überraschend, dass insbesondere Verbindungen der Formel II hervorragende dichroitische und Farbstoffeigenschaften mit einer guten Löslichkeit verbinden.

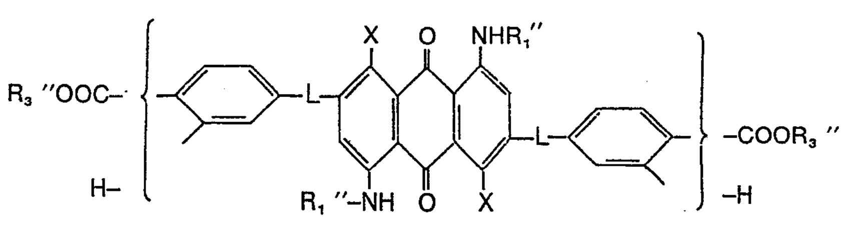

II

In Formel IV haben X und L die zu Formel I angegebene Bedeutung; $R_1''$ bezeichnet insbesondere Wasserstoff, daneben Alkyl, insbesondere $C_1$–$C_6$-Alkyl wie $-CH_3$, $-C_2H_5$, $-C_3H_7$ und $-C_4H_9$, sowie Cycloalkyl, vorzugsweise Cyclohexyl; $R_3''$ bezeichnet Alkyl, insbesondere $C_1$–$C_{18}$-Alkyl, das z.B. durch –OH, –Cl, –Br, –SH, $C_1$–$C_6$-Alkoxy, Hydroxy-$C_1$–$C_6$-alkoxy, Phenoxy, $C_1$–$C_4$-Alkylphenoxy, Chlorphenoxy, Bromphenoxy, Nitrophenoxy und $C_1$–$C_6$-Alkoxyphenoxy substituiert sein kann, Cycloalkyl, insbesondere Cyclopentyl und Cyclohexyl, Aralkyl, insbesondere Phenyl-$C_1$–$C_4$-alkyl, das im Phenylkern beispielsweise durch $C_1$–$C_6$-Alkyl, Halogen wie Chlor, Brom, Fluor, Nitro, $C_1$–$C_6$-Alkoxy, substituiert sein kann sowie Aryl, insbesondere Phenyl oder Naphthyl, das z.B. durch $C_1$–$C_6$-Alkyl, $C_1$–$C_6$-Alkoxy und $C_1$–$C_6$-Alkylthio substituiert sein kann.

Beispiele für $R_3''$ sind:
Methyl-, Ethyl-, n-Propyl-, i-Propyl, n-Butyl-, i-Butyl-, n-Pentyl-, n-Hexyl-, n-Heptyl-, n-Octyl-, n-β-Ethyl-hexyl-, n-Nonyl-, n-Decyl-, n-Undecyl-, n-Docecyl-, n-Hexadecyl-, n-Octadecyl-, β-Hydroxyethyl-, γ-Hydroxy-n-propyl-, δ-Hydroxy-n-butyl-, β-Chlorethyl-, β-Bromethyl-, β-Mercaptoethyl-, β-Methoxyethyl-, β-Ethoxyethyl-, β-Propoxyethyl-, β-Butoxyethyl-, γ-Methoxy-n-propyl-, δ-Methoxy-n-butyl-, β-(β-Hydroxyethoxy)-ethyl-, β-Phenylethyl-, β-(4-Methylphenyl)-ethyl-, β-(4-Ethylphenyl)-ethyl-, β-(4-Butylphenyl)-ethyl-, β-(2-Methylphenyl)-ethyl-, β-(2,4-Dimethylphenyl)-ethyl-, β-(2,4,6-Trimethylphenyl)-ethyl-, β-(4-Chlorphenyl)-ethyl-, β-(4-Nitrophenyl)-ethyl-, β-(4-Methoxyphenyl)-ethyl-, β-Phenoxyethyl-, β-(4-Methylphenoxy)-ethyl-, β-(4-Butylphenoxy)-ethyl-, β-(2-Methylphenoxy)-ethyl-, β-(2,4-Dimethylphenoxy)-ethyl-, β-(4-Chlorphenoxy)-ethyl-, β-(4-Nitrophenoxy)-ethyl-, β-(4-Methoxyphenoxy)-ethyl-, Phenyl-, 4-Pentylphenyl- und 4-Butoxyphenyl.

Besonders gut geeignet zur Verwendung in flüssigkristallinen Materialien sind Farbstoffe der Formel

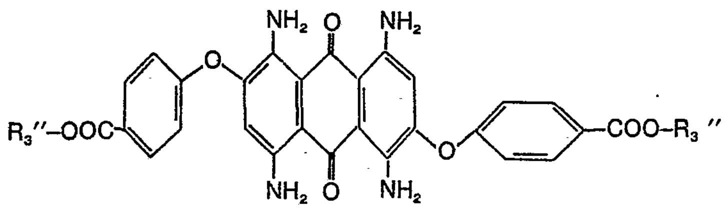
III

in der $R_3''$ die zu Formel II genannte Bedeutung hat.

Besonders geeignet zur Verwendung in flüssigkristallinen Materialien sind Verbindungen der Formel

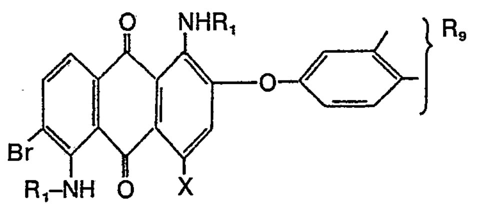
IV

In der Formel IV haben X und $R_1$ die in Formel I angegebene Bedeutung, währen $R_9$ H, Halogen, $CF_3$, Alkyl, Alkoxy, $-SR_3$, $-NO_2$, $-OR_3$, $-CO_2R_3$, $-COR_3$, $-SCOR_3$, $-SO_3R_3$, $-NHCONHR_3$, $-OCONHR_3$, $-OSO_2R_3$, $-NH-CO-O-R_3$, $-OCOR_3$, $-(CH_2)_2CH$, Aryl, Aralkyl, Cycloalkyl, insbesondere $C_3$–$C_7$-Cycloalkyl oder einen heterocyclischen Rest bezeichnet, wobei

$R_3$ für Alkyl, Aralkyl, Cycloalkyl, einen heterocyclischen Rest oder einen Rest der Formel

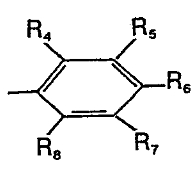

steht worin

$R_4$, $R_8$ H, Halogen, $CF_3$, Alkyl oder Alkoxy und

$R_5$, $R_6$ $R_4$, $-SR_3$, $-NO_2$, $-OR_3$, $-CO_2R_3$, $-COR_3$, $-SCOR_3$, $-SO_3R_3$, $-NHCONHR_3$, $-OCONHR_3$, $-OSO_2R_3$, $-NH-CO-O-R_3$, $-OCOR_3$, $-(CH_2)_2CN$, Aryl, Aralkyl, Cycloalkyl oder einen heterocyclischen Rest und

$R_7$ H, Alkoy oder Alkyl bezeichnen, wobei die für $R_1$, $R_2$, $R_3$, $R_4$, $R_5$, $R_6$, $R_7$ und $R_8$ genannten Alkyl-, Cycloalkyl-, Aryl-, Aralkyl-, Alkoxy- und heterocyclischen Reste substituiert sein können, bezeichnen.

Die Herstellung der neuen Anthrachinonfarbstoffe erfolgt in an sich bekannter Weise.

Die Verbindungen der Formel I, II oder III lassen sich über das literaturbekannte 1,4,5,8-Tetraamino-2,6-dibromanthrachinon durch Umsetzung mit geeigneten Nucleophilen herstellen. Die 1,4,5- und 1,4,8-Triaminoverbindungen lassen sich aus dem 1-Amino-5- bzw. -8-chlor-anthrachinon durch Bromieren und nachfolgende Tosylamidschmelze herstellen.

Nach dem Austausch der Bromatome in β-Stellung wird der Tosylatrest gespalten und man erhält das Endprodukt. Die Verbindungen fallen in der Regel in ungenügender Reinheit an, so dass zusätzliche Massnahmen, wie Säulenchromatographie oder eine Flüssig-flüssig-Verteilung notwendig sind.

Beispiele:

Beispiel 1a

60 g 4-Hydroxybenzoesäure-n-pentylester und 15 g Kaliumcarbonat werden im leichten Stickstoffstrom bei 140–145 °C trocken geheizt, mit 30 g

1,5-Diamino-2,6-dibrom-4,8-di-(p-tosylamino)-anthrachinon

versetzt und 16 Stunden bei 160–170 °C gerührt. Nach dem Erkalten auf 70 °C rührt man die Schmelze in Methanol ein, saugt den ausgefallenen blauen Farbstoff ab, wäscht mit Methanol und Wasser und erhält nach dem Trocknen 31 g = 76,8% d.Th.

1,5-Diamino-2,6-di-(4-pentyloxycarbonyl-phenoxy)-4,8-di-(p-tosylamino)-anthrachinon.

Beispiel 1b

10 g des in Beispiel 1a genannten Farbstoffs werden in 50 ml konz. Schwefelsäure 1 Std. bei 30 °C gerührt und dann bei 15–20 °C langsam mit 50 ml Wasser verdünnt. Man saugt das in Prismen kristallisierte Farbstoff-Sulfat ab, wäscht mit verd. Schwefelsäure und rührt bei 90 °C mit Wasser unter Zusatz von Ammoniak aus. Nach Absaugen und Trocknen erhält man 5,5 g = 80% d.Th.

1,4,5,8-Tetraamino-2,6-di-(4-pentyloxycarbonyl-phenoxy)-anthrachinon,

das nach Reinigung aus z.B. o-Dichlorbenzol in der nematischen Phase bestehend aus einer Mischung von ca.

24% trans-4-Heptyl-(4-cyanophenyl)-cyclohexan,
37% trans-4-Pentyl-(4-cyanophenyl)-cyclohexan,
26% trans-4-Propyl-(4-cyanophenyl)-cyclohexan und
12% trans-4-Pentyl-(4′-cyanobiphenylyl)-cyclohexan

einen Ordnungsgrad S von 0,82 aufweist. Verwendet man in Beispiel 1a anstelle von 4-Hydroxybenzoesäure-n-pentylester entsprechende Ester, so erhält man gemäss Beispiel 1b analog die in der Tabelle 1 angegebenen Farbstoffe:

Tabelle 1

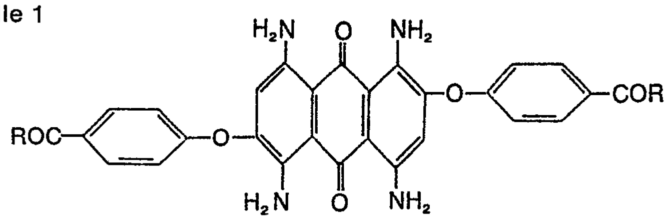

| Beispiel | R | Ordnungsgrad S |
|---|---|---|
| 2 | $CH_3$–O– | 0,78 |
| 3 | $C_2H_5$–O– | 0,76 |
| 4 | n–$C_3H_7$–O– | 0,76 |
| 5 | i–$C_3H_7$–O– | 0,74 |
| 6 | n–$C_4H_9$–O– | 0,76 |
| 7 | i–$C_4H_9$–O– | 0,73 |
| 8 | 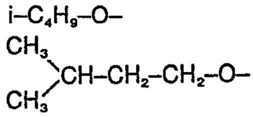 | 0,72 |
| 9 | $C_4H_9$–S– | 0,78 |
| 10 | $CH_3$–$(CH_2)_4$–$CH_2$–O– | 0,78 |
| 11 | 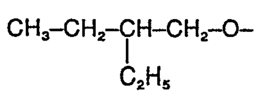 | 0,79 |
| 12 | 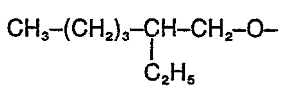 | 0,74 |
| 13 | $CH_3$–$(CH_2)_7$–$CH_2$–O– | 0,74 |
| 14 | $CH_3$–$(CH_2)_{10}$–$CH_2$–O– | 0,72 |
| 15 | $CH_3$–$(CH_2)_{10}$–$CH_2$–S– | 0,72 |
| 16 | 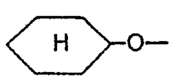 | 0,73 |
| 17 | 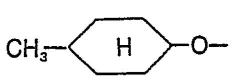 | 0,73 |

Tabelle 1 (Fortsetzung)

| Beispiel | R | Ordnungsgrad S |
|---|---|---|
| 18 | $CH_3-O-CH_2-CH_2-O-$ | 0,71 |
| 19 | $CH_3-S-CH_2-CH_2-O-$ | 0,70 |
| 20 | $CH_3-CH_2-CH_2-O-CH_2-CH_2-O-$ | 0,70 |
| 21 | $CH_3-(CH_2)_3-O-CH_2-CH_2-O-CH_2-CH_2-O-$ | 0,67 |
| 22 | $C_2H_5-S-CH_2-CH_2-O-$ | 0,68 |
| 23 | $(CH_3)_2N-CH_2-CH_2-O-$ | 0,69 |
| 24 | 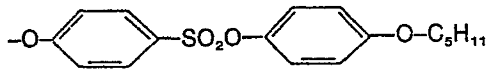 | 0,76 |
| 25 | 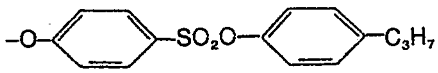 | 0,75 |
| 26 | 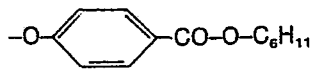 | 0,73 |
| 27 | 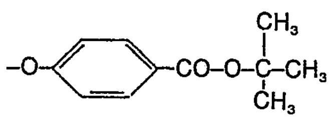 | 0,72 |
| 28 | 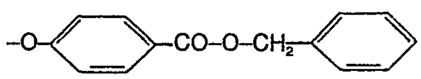 | 0,75 |
| 29 | 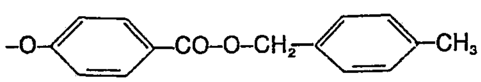 | 0,75 |
| 30 | 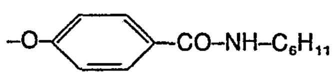 | 0,71 |
| 31 | 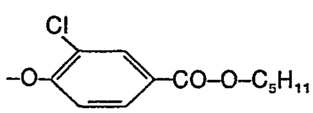 | 0,79 |
| 32 | 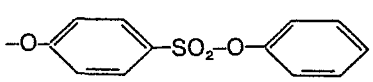 | 0,78 |
| 33 | 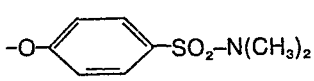 | 0,70 |
| 34 | 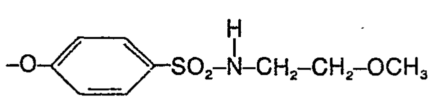 | 0,69 |
| 35 | 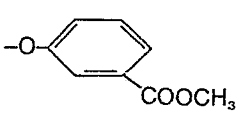 | 0,74 |

Tabelle 1 (Fortsetzung)

| Beispiel | R | Ordnungsgrad S |
|---|---|---|
| 36 | 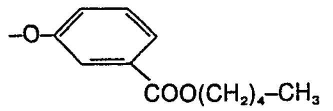 | 0,75 |
| 37 | 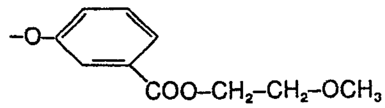 | 0,70 |
| 38 | 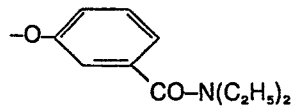 | 0,68 |
| 39 | 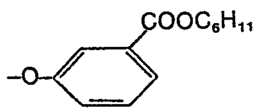 | 0,73 |

**Patentansprüche**

1. Farbstoffe der Formel

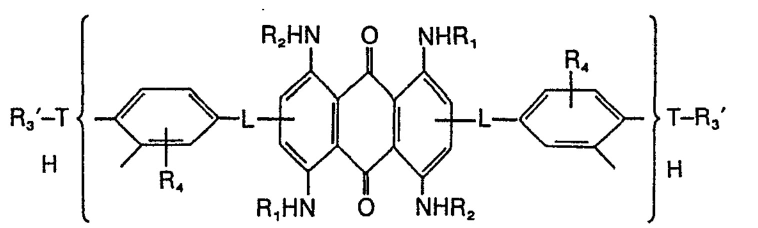

in der

$R_2'$ über $-\underset{R_1}{N}-$, –O– oder –S– oder direkt an T gebundenes $C_1$–$C_{12}$-Alkyl, das beispielsweise durch –OH, $-OCH_3$, Halogen oder $-SCH_3$ substituiert sein kann, $C_5$–$C_6$-Cycloalkyl, Benzyl oder Phenethyl, wobei die Phenylreste im Aralkylrest z.B. durch –OH, $C_1$–$C_4$-Alkoxy, $C_1$–$C_4$-Alkylthio, Phenoxy, Phenylthio, $C_1$–$C_4$-Alkyl und Halogen substituiert sein können,

T eine Gruppe –O–C(L)–, $-NR_1-C(L)-$, –C(L)–, $-O-SO_2-$ oder $-SO_2-$ bedeuten;

L ein O- oder S-Atom oder die Gruppe $-NR_1-$ bezeichnet;

$R_1$, $R_2$ für H, Alkyl, Cycloalkyl, Aryl oder Aralkyl und

$R_4$ für H, Halogen, $CF_3$, Alkyl oder Alkoxy stehen, wobei die für $R_1$, $R_2$ und $R_4$ genannten Alkyl-, Cycloalkyl-, Aryl-, Aralkyl- oder Alkoxy-Reste substituiert sein können.

2. Farbstoffe der Formel

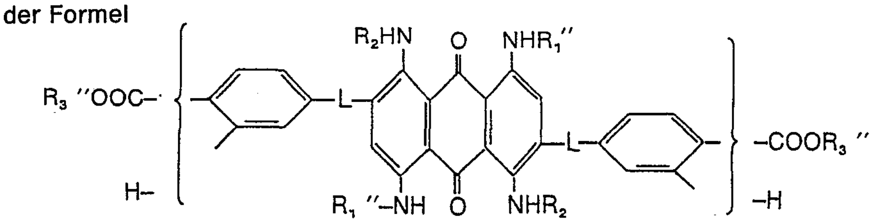 II

in der

L und $R_2$ die in Anspruch 1 angegebenen Bedeutungen haben,

$R_1''$ insbesondere Wasserstoff, daneben Alkyl, insbesondere $C_1$–$C_6$-Alkyl wie $-CH_3$, $-C_2H_5$, $-C_3H_7$ und $-C_4H_9$ sowie Cycloalkyl, vorzugsweise Cyclohexyl bezeichnet,

$R_3''$ Alkyl, insbesondere $C_1$–$C_{18}$-Alkyl, das z.B. durch –OH, Cl, Br, –SH, $C_1$–$C_6$-Alkoxy, Hydroxy-$C_1$–$C_6$-alkoxy, Phenoxy, $C_1$–$C_4$-Alkylphenoxy, Chlorphenoxy, Bromphenoxy, Nitrophenoxy und $C_1$–$C_6$-Alkoxyphenoxy substituiert sein kann, Cycloalkyl, insbesondere Cyclopentyl und Cyclo-

hexyl, Aralkyl, insbesondere Phenyl-$C_1$–$C_4$-alkyl, das im Phenylkern beispielsweise durch $C_1$–$C_6$-Alkyl, Halogen wie Chlor, Brom, Fluor, Nitro, $C_1$–$C_6$-Alkoxy substituiert sein kann sowie Aryl, insbesondere Phenyl oder Naphthyl, das z.B durch $C_1$–$C_6$-Alkyl, $C_1$–$C_6$-Alkoxy und $C_1$–$C_6$-Alkylthio substituiert sein kann, bezeichnet.

3. Farbstoffe der Formel

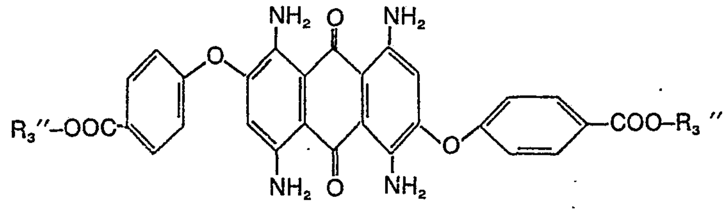

in der $R_3''$ die in Anspruch 2 angegebene Bedeutung hat.

4. Farbstoffe der Formel

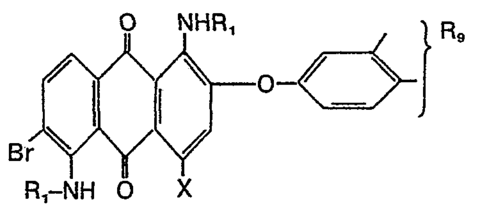

in der

X $-OR_2$ oder $-NHR_2$,

$R_9$ H, Halogen, $CF_3$, Alkyl, Alkoxy, $-SR_3$, $-NO_2$, $-OR_3$, $-CO_2R_3$, $-COR_3$, $-SCOR_3$ $-SO_3R_3$, $-NHCONHR_3$, $-OCONHR_3$, $-OSO_2R_3$, $-NH-CO-O-R_3$, $-OCOR_3$, $-(CH_2)_2CN$, Aryl, Aralkyl, Cycloalkyl, insbesondere $C_3$–$C_7$-Cycloalkyl oder einen heterocyclischen Rest und

$R_1$, $R_2$ H, Alkyl, Cycloalkyl, Aryl oder Aralkyl bezeichnen und

$R_3$ für Alkyl, Aralkyl, Cycloalkyl, einen heterocyclischen Rest oder einen Rest der Formel

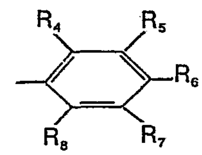

steht worin

$R_4$, $R_8$ H, Halogen, $CF_3$, Alkyl oder Alkoxy und

$R_5$, $R_6$ $R_4$, $-SR_3$, $-NO_2$, $-OR_3$, $-CO_2R_3$, $-SCOR_3$, $-SO_3R_3$, $-NHCONHR_3$, $-OCONHR_3$, $-OSO_2R_3$, $-NH-CO-O-R_3$, $-OCOR_3$, $-(CH_2)_2CH$, Arly, Aralkyl, Cycloalkyl oder einen heterocyclischen Rest und

$R_7$ H, Alkoxy oder Alkyl bezeichnen, wobei die für $R_1$, $R_2$, $R_3$, $R_4$, $R_5$, $R_6$, $R_7$ und $R_8$ genannten Alkyl-, Cycloalkyl-, Aryl-, Aralkyl-, Alkoxy- und heterocyclischen Reste substituiert sein können.

5. Flüssigkristallines Material enthaltend mindestens einen Farbstoff gemäss den Ansprüchen 1–4.

6. Flüssigkristallines Material gemäss Anspruch 5 enthaltend etwa 0,01 bis etwa 30 Gew.-%, vorzugsweise etwa 0,1 bis 10 Gew.-% mindestens eines Anthrachinonfarbstoffs.

**Claims**

1. Dyestuffs of the formula

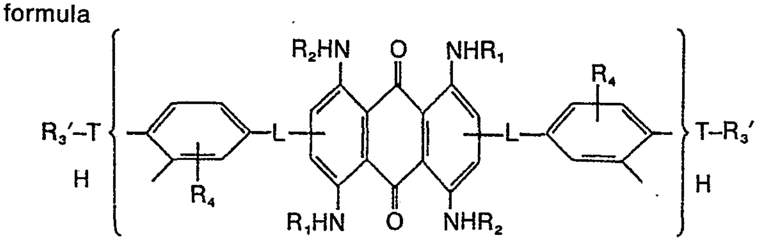

in which

$R_3'$ denotes $C_1$–$C_{12}$-alkyl which is bondet directly to T or via $-\underset{R_1}{\underset{|}{N}}-$, –O– or –S– and which can be substituted for example by –OH, $-OCH_3$, halogen or $-SCH_3$, $C_5$–$C_6$-cycloalkyl, benzyl or phenethyl, it being possible for the phenyl radicals in the aralkyl radical to be substituted for example by –OH, $C_1$–$C_4$-alkoxy, $C_1$–$C_4$-alkylthio, phenoxy, phenylthio, $C_1$–$C_4$-alkyl and halogen,

T denotes a group –O–C(L)–, $-NR_1-C(L)-$, –C(L)–, $-O-SO_2-$ or $-SO_2-$;

L designates an O or S atom or the group $-NR_1-$;

$R_1$ and $R_2$ represent H, alkyl, cycloalkyl, aryl or aralkyl and

$R_4$ represents H, halogen, $CF_3$, alkyl or alkoxy, it being possible for the alkyl, cycloalkyl, aryl, aralkyl or alkoxy radicals mentioned for $R_1$, $R_2$ and $R_4$ to be substituted.

2. Dyestuffs of the formula

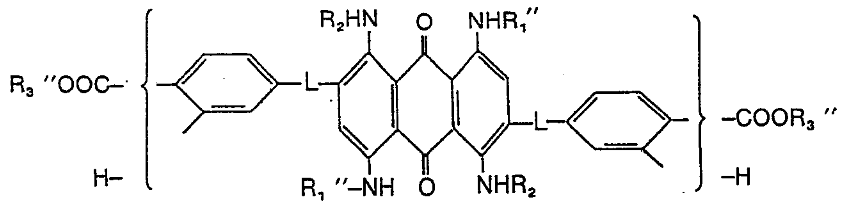

II

in which

L and $R_2$ have the meanings given in Claim 1,

$R_1''$ designates in particular hydrogen, and in addition alkyl, in particular $C_1$–$C_6$-alkyl, such as $-CH_3$, $-C_2H_5$, $-C_3H_7$ and $-C_4H_9$, and cycloalkyl, preferably cyclohexyl, and

$R_3''$ designates alkyl, in particular $C_1$–$C_{18}$-alkyl, which can be substituted, for example by –OH, Cl, Br, –SH, $C_1$–$C_6$-alkoxy, hydroxy-$C_1$–$C_6$-alkoxy, phenoxy, $C_1$–$C_4$-alkylphenoxy, chlorophenoxy, bromophenoxy, nitrophenoxy and $C_1$–$C_6$-alkoxyphenoxy, cycloalkyl, in particular cyclopentyl and cyclohexyl, aralkyl, in particular phenyl-$C_1$–$C_4$-alkyl, which can be substituted in the phenyl ring for example by $C_1$–$C_6$-alkyl, halogen, such as chlorine, bromine, fluorine, nitro or $C_1$–$C_6$-alkoxy, and aryl, in particular phenyl or naphthyl, which can be substituted, for example by $C_1$–$C_6$-alkyl, $C_1$–$C_6$-alkoxy and $C_1$–$C_6$-alkylthio.

3. Dyestuffs of the formula

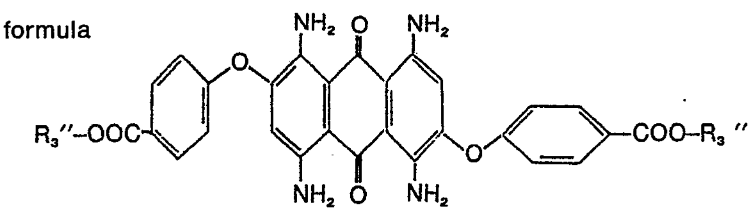

in which

$R_3''$ has the meaning given in Claim 2.

4. Dyestuffs of the formula

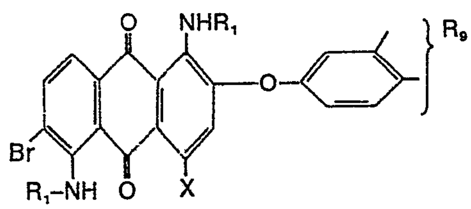

in which

X designates $-OR_2$ or $-NHR_2$,

$R_9$ designates H, halogen, $CF_3$, alkyl, alkoxy, $-SR_3$, $-NO_2$, $-OR_3$, $-CO_2R_3$, $-COR_3$, $-SCOR_3$, $-SO_3R_3$, $-NHCONHR_3$, $-OCONHR_3$, $-OSO_2R_3$, $-NH-CO-O-R_3$, $-OCOR_3$, $-(CH_2)_2CN$, aryl, aralkyl, cycloalkyl, in particular $C_3$–$C_7$-cycloalkyl or a heterocyclic radical and

$R_1$ and $R_2$ designate H, alkyl, cycloalkyl, aryl or aralkyl and

$R_3$ represents alkyl, aralkyl, cycloalkyl, a heterocyclic radical or a radical of the formula

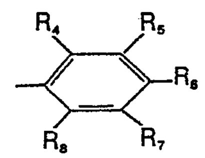

wherein

$R_3$ and $R_8$ designate H, halogen, $CF_3$, alkyl or alkoxy and

$R_5$ and $R_6$ designate $R_4$, $-SR_3$, $-NO_2$, $-OR_3$, $-CO_2R_3$, $-COR_3$, $-SCOR_3$, $-SO_3R_3$, $-NHCONHR_3$, $-OCONHR_3$, $-OSO_2R_3$, $-NH-CO-O-R_3$, $-OCOR_3$, $-(CH_2)_2CN$, aryl, aralkyl, cycloalkyl or a heterocyclic radical and

$R_7$ designates H, alkoxy or alkyl, it being possible for the alkyl, cycloalkyl, aryl, aralkyl, alkoxy and heterocyclic radicals mentioned for $R_1$, $R_2$, $R_3$, $R_4$, $R_5$, $R_6$, $R_7$ and $R_8$ to be substituted.

5. Liquid-crystalline material containing at least one dyestuff according to Claims 1–4.

6. Liquid-crystalline material according to Claim 5, containing about 0.01 to about 30% by weight, preferably about 0.1 to 10% by weight, of at least one anthraquinone dyestuff.

**Revendications**

1- Colorants de formule:

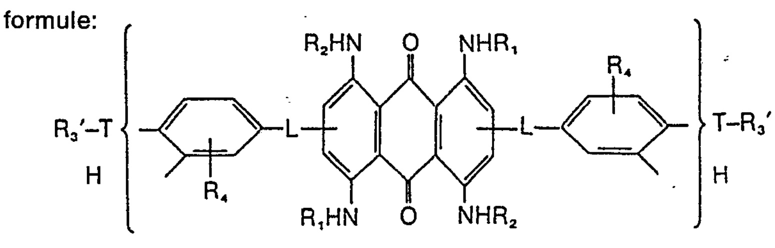

dans laquelle:

$R_3'$ représente un groupe alkyle en $C_1$–$C_{12}$ relié à T directement ou par l'intermédiaire de $-\underset{R_1}{N}-$, –O– ou –S–, qui peut être substitué par exemple par des groupes –OH, $-OCH_3$, des halogènes ou des groupes $-SCH_3$, un groupe cycloalkyle en $C_5$–$C_6$, benzyle ou phénéthyle, les noyaux phényle des groupes aralkyle pouvant être substitués par exemple par des groupes –OH, alcoxy en $C_1$–$C_4$, alkylthio en $C_1$–$C_4$, phénoxy, phénylthio, alkyle en $C_1$–$C_4$ et des halogènes,

T représente un groupe –O–C(L)–, $-NR_1-C(L)-$, –C(L)–, $-O-SO_2-$ ou $-SO_2-$,

L représente un atome d'oxygène ou de soufre ou le groupe $-NR_1-$, $R_1$, $R_2$ représentent H, des groupes alkyle, cycloalkyle, aryle ou aralkyle, et

$R_4$ représente H, un halogène, un groupe $CF_3$, alkyle ou alcoxy, les groupes alkyle, cycloalkyle, aryle, aralkyle ou alcoxy mentionnés pour $R_1$, $R_2$ et $R_4$ pouvant être substitués.

2. Colorants de formule:

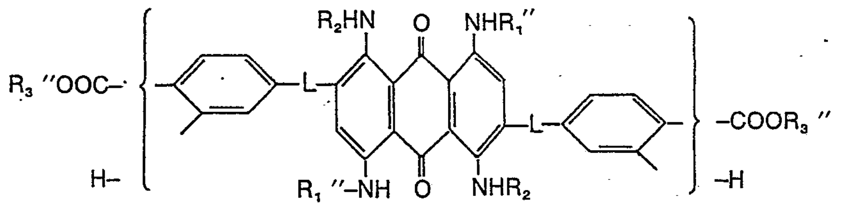

II

dans laquelle:

L et $R_2$ ont les significations indiquées dans la revendication 1,

$R_1''$ représente en particulier l'hydrogène mais également un groupe alkyle, en particulier alkyle en $C_1$–$C_6$ tel que $-CH_3$, $-C_2H_5$, $-C_3H_7$ et $C_4H_9$ ou un groupe cycloalkyle, de préférence cyclohexyle,

$R_3''$ représente un groupe alkyle, en particulier alkyle en $C_1$–$C_{18}$, qui peut être substitué par exemple par –OH, Cl, Br, –SH, un groupe alcoxy en $C_1$–$C_6$, hydroxy-alcoxy en $C_1$–$C_6$, phénoxy, (alkyle en $C_1$–$C_4$)-phénoxy, chlorophénoxy, bromophénoxy, nitrophénoxy et (alcoxy en $C_1$–$C_6$)-phénoxy, un groupe cycloalkyle, en particulier cyclopentyle ou cyclohexyle, un groupe aralkyle, en particulier phényl-alkyle en $C_1$–$C_4$ qui peut être substitué dans le noyau phényle par exemple par des groupes alkyle en $C_1$–$C_6$, des halogènes tels que le chlore, le brome, le fluor, des groupes nitro, alcoxy en $C_1$–$C_6$, ou un groupe aryle, en particulier phényle ou naphtyle, qui peut être substitué par exemple par des groupes alkyle en $C_1$–$C_6$, alcoxy en $C_1$–$C_6$ et alkylthio en $C_1$–$C_6$,

3. Colorants de formule:

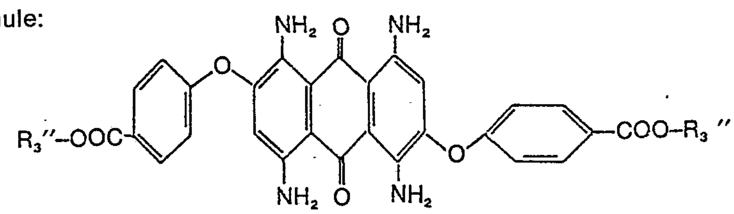

dans laquelle $R_3''$ a les significations indiquées dans la revendication 2.

4. Colorants de formule:

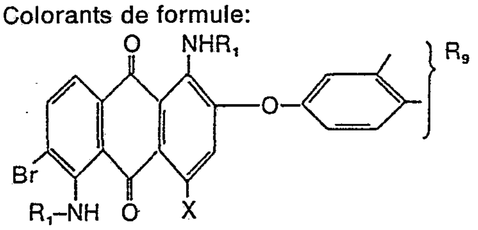

dans laquelle:

X représente $-OR_2$ ou $-NHR_2$.

$R_9$ représente H, un halogène, $CF_3$, un groupe alkyle, alcoxy, $-SR_3$, $-NO_2$, $-OR_3$, $-CO_2R_3$, $-COR_3$, $-SCOR_3$, $-SO_3R_3$, $-NHCONHR_3$, $-OCONHR_3$, $-OSO_2R_3$, $-NH-CO-O-R_3$, $-OCOR_3$, $-(CH_2)_2CN$, aryle, aralkyle, cycloalkyle, en particulier cycloalkyle en $C_3$–$C_7$ ou un reste hétérocyclique et $R_1$, $R_2$ représentent H, des groupes alkyle, cycloalkyle, aryle ou aralkyle et

$R_3$ représente un groupe alkyle, aralkyle, cycloalkyle, un reste hétérocyclique ou un reste de formule

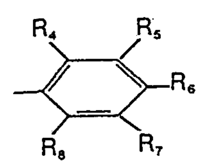

dans laquelle:

$R_4$, $R_8$ représentent H, des halogènes, des groupes $CF_3$, alkyle ou alcoxy et

$R_5$, $R_6$, $R_4$ représentent $-SR_3$, $-NO_2$, $-OR_3$, $-CO_2R_3$, $-COR_3$, $-SCOR_3$, $-SO_3R_3$, $-NHCONHR_3$, $-OCONHR_3$, $-OSO_2R_3$, $-NH-CO-O-R_3$, $-OCOR_3$, $-(CH_2)_2CN$, des groupes aryle, aralkyle, cycloalkyle ou des restes hétérocycliques et

$R_7$ représente H, un groupe alcoxy ou alkyle, les groupes alkyle, cycloalkyle, aryle, aralkyle, alcoxy et restes hétérocycliques mentionnés pour $R_1$, $R_2$, $R_3$, $R_4$, $R_5$, $R_6$, $R_7$ et $R_8$ pouvant être substitués.

5. Matière à cristaux liquides contenant au moins un colorant selon les revendications 1 à 4.

6. Matière à cristaux liquide selon la revendication 5, contenant d'environ 0,01 à 30% en poids, de préférence d'environ 0,1 à 10% en poids d'au moins un colorant anthraquinonique.